# EUROPÄISCHE PATENTSCHRIFT

(11) **EP 3 580 033 B1**
(45) Veröffentlichungstag und Bekanntmachung des Hinweises auf die Patenterteilung: **24.08.2022**
(21) Anmeldenummer: 18703732.0
(22) Anmeldetag: 31.01.2018
(51) Int. Cl.: B29C 45/14, B29C 45/16

(54) **VERFAHREN ZUR HERSTELLUNG EINES KUNSTSTOFFFORMTEILS MIT EINER DEKORIERTEN OBERFLÄCHE SOWIE EIN KUNSTSTOFFFORMTEIL MIT EINER DEKORIERTEN OBERFLÄCHE**
PROCESS FOR MANUFACTURING A PLASTIC ARTIKLE WITH A DECORATIVE SURFACE AND SUCH A PLASTIC ARTIKLE WITH A DECORATIVE SURFACE
PROCÉDÉ DE LA FABRICATION D'UN ARTICLE EN MATIÈRE PLASTIQUE AVEC UNE SURFACE DÉCORÉE ET UN TEL ARTICLE EN MATIÈRE PLASTIQUE AVEC UNE SURFACE DÉCORÉE

(30) Priorität: 09.02.2017 DE 102017102541
(43) Veröffentlichungstag der Anmeldung: 18.12.2019
(73) Patentinhaber: Leonhard Kurz Stiftung & Co. KG, 90763 Fürth (DE)
(72) Erfinder: BURGER, Harald, 90480 Nürnberg (DE)
(74) Vertreter: Louis Pöhlau Lohrentz
(86) Internationale Anmeldenummer: PCT/EP2018/052438
(87) Internationale Veröffentlichungsnummer: WO 2018/145977

(56) Entgegenhaltungen:
- DE-A1-102009 031 478
- DE-A1-102010 018 591
- DE-A1-102012 203 412
- DE-A1-102013 213 629
- DE-A1-102015 109 642
- US-A1- 2010 196 651
- US-A1- 2015 239 159
- US-B2- 7 906 054

## Beschreibung

Die Erfindung betrifft ein Verfahren zur Herstellung eines Kunststoffformteils mit einer dekorierten Oberfläche sowie ein Kunststoffformteil.

Zur produktionsintegrierten Oberflächendekoration von Kunststoffteilen werden Kunststofffolien als Laminate oder als von einer Trägerlage transferierbare Schichten, insbesondere Dekorlagen, eingesetzt. Derartig dekorierte Kunststoffteile werden beispielsweise im Automobilbau für Automobil-Innenteile wie Türleisten, Leisten in Instrumententafeln und Mittelkonsolblenden, im Unterhaltungselektronik-Bereich für Dekorleisten an Fernsehgeräten, im Telekommunikationsbereich für Gehäuseschalen tragbarer Geräte wie Mobiltelefone oder allgemein für Behältnisse eingesetzt.

Aus der DE 10 2009 031 478 A1 ist ein Mehrschichtkörper eines dekorierten, ein Oberflächenrelief aufweisenden Kunststoffartikels, bekannt.

Aus der US 7 906 054 B2 ist ein dekoriertes IMD-Produkt bekannt.

Aus der DE 10 2010 018 591 A1 ist ein Verfahren zur Herstellung eines foliendekorierten Kunststoffteils mit einer Sichtoberfläche, die eine räumlich definierte optische Struktur aufweist, bekannt.

Aus der US 2015/239159 A1 ist ein Verfahren zur Herstellung eines Spritzgussartikels mit einer UV-härtenden Farbe bekannt.

Aus der US 2010/196651 A1 ist ein Spritzgussartikel bekannt, der ein funktionales Element umfasst.

Aus der DE 10 2013 213 629 A1 ist ein Verfahren zur vollständigen Herstellung eines spritzgegossenen Schaltungsträgers innerhalb eines Spritzgießwerkzeuges bekannt.

Aus der DE 10 2015 109 642 A1 ist ein Verfahren zum Dekorieren eines Gegenstands bekannt.

Aus der DE 10 2012 203412 A1 ist ein Kunststoffdekorteil mit einer Hochglanzlackierung und einem Dekor bekannt.

Bei der Oberflächendekoration von Kunststoffteilen kommt insbesondere das IMD-Verfahren (IMD = In-Mould-Decoration) zum Einsatz. Beim IMD-Verfahren wird eine Folie, insbesondere mit zumindest einer Trägerlage und einer von der Trägerlage ablösbaren Dekorlage, innerhalb einer geöffneten Spritzgussform platziert. Nachdem die Spritzgussform geschlossen worden ist, wird die Folie mit einer Kunststoffschmelze hinterspritzt, wobei sich die Dekorlage mit der Kunststoffschmelze unter Druck und Temperatur zu einem festen Verbund verbinden. Nach dem Öffnen des Werkzeugs und dem Abkühlen der Kunststoffschmelze kann das fertig dekorierte Formteil entnommen werden, wobei die Trägerlage von dem dekorierten Spritzgussteil abgezogen wird.

Nachteilig beim IMD-Verfahren ist, dass es Restriktionen bezüglich der Formteilgeometrie gibt, da eine gute Qualität nur dann sichergestellt werden kann, wenn die Verdehnung der Folie nicht zu groß ist. Dies bedeutet, dass sich Formteile nur zuverlässig im IMD-Verfahren herstellen lassen, wenn die Formteile vergleichsweise lokal und/oder global geringe Wölbungen und/oder nicht zu kleine Radien aufweisen.

Ferner ist zum Dekorieren von Formteilen bzw. Substraten das Heißprägen bekannt. Hierbei wird ein Dekor, insbesondere wenigstens ein Teil zumindest einer Dekorlage, mittels eines beheizten Stempels oder eines Rads, der/das während eines bestimmten Zeitraums Druck auf die Trägerlage ausübt, von einer Trägerlage auf eine zu prägende Fläche übertragen.

Aber auch das Heißprägen weist Beschränkungen auf. So kann aufgrund der konstruktiven Einschränkungen bei dem erforderlichen Kontakt zwischen Prägestempelfläche bzw. Prägeradauflage und Substrat zur Ausübung des Prägedrucks und für das ausreichende Einwirken von Wärme nicht jede Geometrie dekoriert werden.

Der Erfindung liegt nun die Aufgabenstellung zugrunde, ein verbessertes Verfahren anzugeben, mit dem sich Formteile - auch mit komplizierten bzw. schwierigen Geometrien - zuverlässig dekorieren lassen.

Dies wird gelöst durch ein Verfahren zur Herstellung eines Kunststoffformteils mit einer dekorierten Oberfläche nach Anspruch 1 sowie durch ein Kunststoffformteil nach Anspruch 21.

Diese Aufgabe wird durch ein Verfahren zur Herstellung eines Kunststoffformteils mit einer dekorierten Oberfläche gelöst, aufweisend die Schritte:
- Bereitstellen eines Kunststoffzwischenprodukts aufweisend ein Spritzgussteil und zumindest eine erste Dekorlage, wobei die Dekorlage bevorzugt zumindest in einem ersten Oberflächenbereich des Spritzgussteils angeordnet ist,
- Bereitstellen einer zweiten Prägefolie mit einer zweiten Dekorlage,
- Heißprägen der zweiten Prägefolie auf das Kunststoffzwischenprodukt und/oder auf das Spritzgussteil bevorzugt zumindest in einem zweiten Oberflächenbereich des Spritzgussteils.

Bevorzugt finden die einzelnen Verfahrensschritte in der angegebenen Reihenfolge statt.

Die Aufgabe wird ferner mit einem Kunststoffformteil, insbesondere erhältlich durch ein Verfahren nach einem der vorangehenden Ansprüche, gelöst, umfassend ein Spritzgussteil mit zumindest einem ersten und einem zweiten Oberflächenbereich, eine erste Dekorlage und eine zweite Dekorlage, wobei die erste Dekorlage zumindest in dem ersten Oberflächenbereich und die zweite Dekorlage zumindest in dem zweiten Oberflächenbereich angeordnet sind.

Es hat sich gezeigt, dass durch die Erfindung auch Formteile dekoriert werden können bzw. erhältlich sind, die zuvor nicht bzw. nur schwer hergestellt werden konnten oder aber etliche qualitative Mängel aufwiesen, insbesondere hinsichtlich der optischen Wirkung. Durch die Erfindung ist es sogar auch möglich, Spritzgussteile zu dekorieren bzw. dekorierte Formteile zu erhalten, die einen Kanten- bzw. Eckradius von kleiner als 0,3 mm, bevorzugt kleiner als 0,2 mm, aufweisen. Derartige Spritzgussteile können nun auch im Bereich der Kanten- bzw. Eckradien mit einer Dekorlage versehen werden.

Ferner ist durch die vorliegende Erfindung die Dekoration von Formteilen insbesondere nicht nur auf geringe Dekorationstiefen beschränkt. Die Dekoration kann sich nun auch über eine größere Dekorationstiefe erstrecken. Im Sinne der Erfindung wird unter Dekorationstiefe insbesondere die maximale Z-Tiefe einer Spritzgussform auf der Dekorseite bzw. der Dekorkavität verstanden. Die Dekorationstiefe hängt insbesondere vom kleinsten vorhandenen Eck- bzw. Kantenradius der Formgeometrie ab. Dabei ist die Dekorationstiefe bevorzugt in etwa genauso groß wie der kleinste vorhandene Eck- bzw. Kantenradius der Formgeometrie. Beträgt also beispielsweise ein Eck- oder Kantenradius der Formgeometrie ca. 1 mm, dann beträgt die maximal erreichbare Dekorationstiefe der Formgeometrie auch nur ca. 1 mm.

Des Weiteren lassen sich mit dem Verfahren auch Formteile mit zumindest stückweise zylindrisch gebogener Seitenfläche herstellen, wobei die Seitenfläche eine maximale Schräge bzw. Konizität von bis zu 10°, bevorzugt bis zu 5° aufweisen kann.

Die erste Dekorlage ist bevorzugt Teil bzw. Bestandteil einer ersten Prägefolie. Die Dekorlagen können sowohl ein- als auch mehrschichtig ausgebildet sein. Bevorzugt wird die zweite Prägefolie bzw. die zweite Dekorlage der zweiten Prägefolie derart auf das Kunststoffzwischenprodukt aufgebracht, dass die zweite Prägefolie bzw. die zweite Dekorlage unmittelbar an die erste Dekorlage angrenzt. Dies ist insbesondere dahingehend zu verstehen, dass keine Lücken zwischen den Dekorlagen vorhanden sind. Es kommt zu einer Berührung der Dekorlagen. Hierdurch kann ein nahtloser Übergang der Dekorlagen ineinander erreicht werden. Bei Betrachtung des dekorierten Formteils wird hierdurch der Eindruck erweckt, dass eine durchgehende Dekorierung vorliegt. Man erhält so optisch ein qualitativ hochwertiges Formteil. Insbesondere wenn die Dekorlagen identisch ausgebildet sind, weist das dekorierte Formteil einen homogenen Eindruck auf. Es erscheint so, als ob das Formteil eine ununterbrochene bzw. eine einzige Dekorierung aufweist.

Vorteilhafterweise wird die zweite Prägefolie bzw. die zweite Dekorlage derart auf das Kunststoffzwischenprodukt aufgebracht, dass die zweite Prägefolie bzw. die zweite Dekorlage die erste Dekorlage bereichsweise überlappt. Hierdurch wird insbesondere sichergestellt, dass das Spritzgussteil nicht sichtbar ist. Bei der Fertigung des Spritzgussteils spielen somit optische Erscheinungen bzw. Eigenschaften des gefertigten Spritzgussteils, wie beispielsweise Farbgebung, Oberflächenerscheinung wie Schlieren, Glanzunterschiede und/oder Freistrahlbildung eine untergeordnete Rolle, was die Fertigung des Spritzgussteils erleichtert und auch verbilligt. Die Dicke der Dekorlagen im Verhältnis zur Dicke des Spritzgussteils ist so gering, dass diese im Hinblick auf die Dicke für das Kunststoffformteil prinzipiell nicht von Bedeutung ist und grundsätzlich vernachlässigbar ist. Im Wesentlichen entspricht die Dicke des Spritzgussteils der Dicke des Kunststoffformteils. Liegt eine teilweise Überlappung der Dekorlagen vor, dann ist diese für einen Betrachter aufgrund der dünnen Schichtdicken grundsätzlich nicht bzw. nur unter Zuhilfenahme von Hilfsmitteln zu erkennen.

Insbesondere überlappt die zweite Prägefolie bzw. die zweite Dekorlage der zweiten Prägefolie die erste Dekorlage um maximal 5 mm, bevorzugt um maximal 2 mm, besonders bevorzugt um maximal 1 mm. Es ist aber auch durchaus denkbar, dass die erste Dekorlage die zweite Dekorlage wenigstens bereichsweise überlappt.

Erfindungsgemäß wird das Kunststoffzwischenprodukt durch zumindest die folgenden Schritte hergestellt:
- Anordnen bzw. Einbringen der ersten Prägefolie mit der ersten Dekorlage in eine Kavität einer Spritzgusswerkzeugform,
- zumindest bereichsweises Hinterspritzen der ersten Prägefolie mit einer Kunststoffmasse, so dass bevorzugt eine erste Prägefolie und/oder die erste Dekorlage zumindest in dem ersten Oberflächenbereich des Spritzgussteils mit dem Spritzgussteil verbunden wird.

Ein solches Vorgehen weist den Vorteil auf, dass die Herstellung des Spritzgussteils und das Dekorieren des Spritzgussteils in einem Verfahrensschritt stattfinden. Es handelt sich hierbei also um ein sehr effizientes und ökonomisches Verfahren.

Erfindungsgemäß wird das Kunststoffzwischenprodukt durch zumindest die folgenden Schritte hergestellt:
- Herstellen des Spritzgussteils mittels Spritzguss,
- Anordnen einer ersten Prägefolie mit der ersten Dekorlage über zumindest den ersten Oberflächenbereich des Spritzgussteils,
- Heißprägen der ersten Prägefolie und/oder der ersten Dekorlage mit dem Spritzgussteil, so dass bevorzugt die erste Prägefolie und/oder die erste Dekorlage zumindest in dem ersten Oberflächenbereich des Spritzgussteils mit dem Spritzgussteil verbunden wird.

Von Vorteil ist es hierbei, wenn die erste Prägefolie vorgeheizt, insbesondere gleichmäßig vorgeheizt, wird. Durch das Vorheißen dehnt sich das Material der

Prägefolie, insbesondere die Trägerlage, wodurch ein zuverlässiges Elastizitäts- bzw. Dehnverhalten sichergestellt werden kann.

Von Vorteil ist es hierbei, wenn die erste Prägefolie mittels Vakuumansaugung, insbesondere während und/oder nach dem Vorheizen an und/oder über das Spritzgussteil angesaugt wird. Durch das Ansaugen liegt die erste Prägefolie besonders dicht an dem Spritzgussteil an.

Bevorzugt weist die erste und/oder zweite Prägefolie eine Trägerlage auf. Die Trägerlage sorgt insbesondere dafür, dass die Prägefolie eine ausreichende Stabilität aufweist und sich somit sicher verarbeiten lässt. Die Trägerlage besteht bevorzugt aus PET und/oder Polypropylen, Polystyrol, PVC, PMMA, ABS und/oder Polyamid. Insbesondere weist die Trägerlage eine Schichtdicke von 6 µm bis 250 µm, bevorzugt eine Schichtdicke von 12 µm bis 100 µm, besonders bevorzugt eine Schichtdicke zwischen 19 µm und 75 µm, auf. Idealerweise beträgt die Schichtdicke der Trägerlage der ersten Prägefolie ca. 75 µm und/oder die Trägerlage der zweiten Prägefolie ca. 19 µm.

Vorteilhafterweise wird die Trägerlage der ersten und/oder der zweiten Prägefolie von der ersten bzw. zweiten Dekorlage abgezogen. Das Abziehen der Trägerlage erfolgt insbesondere nachdem die erste Dekorlage wenigstens bereichsweise mit dem Spritzgussteil fest verbunden worden ist bzw. nachdem die zweite Dekorlage wenigstens bereichsweise mit dem Kunststoffzwischenprodukt bzw. dem Spritzgussteil fest verbunden worden ist. Durch das Abziehen der Trägerlage stellt die Dekorlage die oberste Schicht des Formteils dar und sorgt somit unter anderem für den optischen Eindruck des Formteils.

Bevorzugt weist die erste und/oder die zweite Prägefolie eine Ablöseschicht auf. Die Ablöseschicht umfasst insbesondere Wachs, wachshaltige Verbindungen, Fettsäureester und/oder Motansäureester. Die Ablöseschicht kann eine Schichtdicke von 0,001 µm bis 1 µm, bevorzugt eine Schichtdicke von 0,001 µm bis 0,1 µm, besonders bevorzugt eine Schichtdicke von ca. 0,01 µm, aufweisen.

Insbesondere weist die erste und/oder die zweite Dekorlage eine Metallisierung auf. Die Metallisierung umfasst bevorzugt Aluminium. Die Metallisierung kann auch Kupfer, Chrom oder Zinn umfassen. Insbesondere Zinn ist dabei als metallisierte, elektrisch nichtleitende Schicht ausgebildet. Dabei ist die Zinn-Schicht bevorzugt in galvanisch voneinander getrennte Bereiche unterteilt, die insbesondere bei einer Vakuum-Metallisierung im Inselwachstum aufwachsen. Die dabei entstehenden Inseln stehen nicht in elektrischem Kontakt zueinander. Solche elektrisch nicht-leitfähigen, vakuum-metallisierten Schichten werden auch als NCVM-Schichten (NCVM = Non Conductive Vacuum Metallized) bezeichnet. Diese Unterteilung ist für den menschlichen Betrachter nicht oder kaum mehr erkennbar und damit wird das optische Erscheinungsbild nicht durch die Unterteilung beeinflusst. Die Metallisierung kann eine Schichtdicke bevorzugt von 5 nm bis 100 nm, insbesondere bevorzugt eine Schichtdicke von 5 nm bis 50 nm, besonders bevorzugt eine Schichtdicke von ca. 40 nm, aufweisen.

Die erste und/oder zweite Dekorlage umfassen vorzugsweise eine oder mehrere Schichten. In einer Ausgestaltung kann die erste und/oder die zweite Dekorlage auch zumindest eine Farbschicht aufweisen. Die Farbschichten können unterschiedlich eingefärbt sein, transparent und/oder opak ausgebildet sein und/oder auch durch eine oder mehrere weitere Schichten, insbesondere transparente Schichten, getrennt sein. Die Farbschichten umfassen insbesondere Pigmente, insbesondere auch optisch variable Pigmenten und/oder metallische Pigmenten und/oder Farbstoffe. Bevorzugt weist die Farbschicht eine Schichtdicke von 0,4 µm bis 10 µm, insbesondere bevorzugt eine Schichtdicke von 0,6 µm bis 3 µm, auf. Idealerweise weist die Farbschicht der ersten Dekorlage eine Schichtdicke von ca. 1,6 µm und die Farbschicht der zweiten Dekorlage eine Schichtdicke von ca. 1,8 µm auf. Die Farbschichten können beispielsweise gedruckt sein, insbesondere mittels Tiefdruck, Siebdruck, Flexodruck oder Digitaldruckverfahren wie Inkjetdruck oder xerografischen Druckverfahren.

Weiter kann die erste und/oder zweite Dekorlage auch eine oder mehrere Reflexionsschichten umfassen, die vorzugsweise opak, transluzent und/oder partiell ausgebildet sind. Insbesondere können die Reflexionsschichten aus Metallen und/oder HRI-Schichten (HRI = High Refraktive Index), also Schichten mit hohem Brechungsindex, insbesondere höher als 1,5 bestehen. Als Metalle kommen beispielsweise Aluminium, Chrom, Zinn oder Kupfer oder Legierungen daraus in Frage. Als HRI-Schichten kommen beispielsweise ZnS oder SiO₂ in Frage. Weiter kann die Dekorschicht auch eine oder mehrere optisch aktive Reliefstrukturen, insbesondere diffraktive Strukturen und/oder Hologramme und/oder refraktive Strukturen und/oder Mattstrukturen aufweisen. Dabei ist zumindest eine Reflexionsschicht direkt auf der Reliefstruktur zumindest bereichsweise angeordnet.

Es ist aber grundsätzlich auch vorstellbar, dass die erste und/oder die zweite Dekorlage zumindest eine Funktionsschicht aufweist. Funktionsschichten sind beispielsweise elektrisch leitende Schichten (Metall, ITO = Indium Tin Oxide), elektrisch halbleitende Schichten (z. B. Halbleiterpolymere), elektrisch nichtleitende Schichten (elektrisch isolierende Lackschichten), optisch mattierende oder anti-reflektierend wirkende Schichten (z. B. mikroskopische Mattstrukturen), Anti-Haft-Schichten, Anti-Schmutz-Schichten und/oder Antistatik-Schichten, und/oder haptisch bzw. taktil spezifisch wahrnehmbare Schichten, beispielsweise eine Soft-Touch-Schicht.

Bevorzugt weist die erste und/oder die zweite Dekorlage eine Haftvermittlerschicht auf. Die Schichtdicke der Haftvermittlerschicht kann zwischen 0,05 µm und 5 µm, bevorzugt zwischen 0,4 µm und 0,6 µm und besonders bevorzugt ca. 0,2 µm, betragen.

Insbesondere weist die erste und/oder die zweite Dekorlage eine Schutzschicht auf. Die Schutzschicht weist insbesondere eine Schichtdicke von 0,4 µm bis 10 µm, bevorzugt eine Schichtdicke von 0,6 µm bis 2 µm, insbesondere bevorzugt eine Schichtdicke von ca. 0,9 µm, auf. Vorteilhaft ist es, wenn nur die zweite Dekorlage eine Schutzschicht aufweist.

Die Schutzschicht kann als ein Schutzlack aus einem PMMA-basierenden Lack mit einer Schichtdicke im Bereich von 2 µm bis 5 µm ausgebildet sein. Der Schutzlack kann auch aus einem strahlenhärtenden Dual Cure Lack bestehen. Dieser Dual Cure Lack kann in einem ersten Schritt beim und/oder nach dem Aufbringen in flüssiger Form thermisch vorvernetzt werden und in einem zweiten Schritt nach der Verarbeitung der Transferfolie insbesondere über energiereiche Strahlung, vorzugsweise UV-Strahlung radikalisch nachvernetzt werden. Dual Cure Lacke dieser Art können aus verschiedenen Polymeren oder Oligomeren bestehen, die bevorzugt ungesättigte Acrylat-, oder Methacrylat-Gruppen besitzen. Diese funktionellen Gruppen können in dem o.g. zweiten Schritt radikalisch miteinander vernetzt werden. Zur thermischen Vorvernetzung im ersten Schritt müssen bei diesen Polymeren oder Oligomeren auch mindestens zwei oder mehrere Alkoholgruppen vorhanden sein. Diese Alkoholgruppen können mit multifunktionellen Isocyanaten oder Melaminformaldehydharzen vernetzt werden. Als ungesättigte Oligomere oder Polymere kommen verschiedene UV-Rohstoffe wie Epoxyacrylate, Polyetheracrylate, Polyesteracrylate und insbesondere Acrylatacrylate in Frage. Als Isocyanat kommen sowohl geblockte als auch ungeblockte Vertreter auf TDI (TDI = Toluol-2,4-diisocyanat), HDI (HDI = Hexamethylendiisocyanat) oder IPDI-Basis (IPDI = Isophorondiisocyanat) in Frage. Die Melaminvernetzer können vollveretherte Versionen sein, können Imino-Typen sein oder Benzoguanamin-Vertreter darstellen. Viele dieser Schutzlacke wären ohne Tiefziehmembran nicht ausreichend verformbar und damit nicht ausreichend tiefziehfähig.

Es kann auch vorgesehen sein, dass die Schutzschicht als ein Schutzlack aus einem auf PMMA (PMMA = Polymethylmethacrylat) basierenden Lack, oder einem Lack basierend auf einer Mischung aus PVDF (PVDF = Polyvinylidenfluorid) und PMMA, insbesondere mit einer Schichtdicke im Bereich von 15 µm bis 30 µm, ausgebildet ist. Diese Lacke bringen die für eine Transferfolie und deren ausreichend genaue und saubere Ausprägbarkeit bzw. Trennbarkeit an den gewünschten Außengrenzen der übertragenen Flächenbereiche der Transferlagen notwendige mechanische Sprödigkeit mit.

Bevorzugt weist die erste und/oder die zweite Dekorlage eine ein- oder mehrschichtige Kleberschicht auf. Die Kleberschicht sorgt insbesondere für eine ausreichend gute Haftung zwischen den Dekorlagen und dem Spritzgussteil und/oder zwischen den Dekorlagen untereinander. Die Schichtdicke der Kleberschicht beträgt bevorzugt zwischen 0,4 µm und 10 µm, besonders bevorzugt zwischen 0,6 µm und 3 µm. Von Vorteil ist es, wenn die Kleberschicht der ersten Dekorlage ca. 1,9 µm und/oder die Kleberschicht der zweiten Dekorlage ca. 2,2 µm beträgt. Es kann vorgesehen sein, dass die Kleberschicht mit einer Schichtdicke im Bereich von 1 µm bis 5 µm ausgebildet ist. Infrage kommende Rohstoffe für die Kleberschicht sind PMMA, PVC, Polyester, Polyurethane, chlorierte Polyolefine, Polypropylen, Epoxidharze oder Polyurethan-Polyole, insbesondere in Kombination mit inaktivierten Isocyanaten. Die Kleberschicht kann außerdem anorganische Füllstoffe enthalten.

Vorteilhafterweise sind die Kleberschichten und die Schutzschichten, insbesondere die auf dem hergestellten Formteil bzw. auf dem Spritzgussteil aneinander grenzende Kleber- und Schutzschichten, so ausgebildet, dass sie ausreichend gut aneinander haften. Hierdurch kann eine optimale Verbindung zwischen den Dekorlagen erreicht werden, so dass sichergestellt werden kann, dass ein sauberer und zuverlässiger Abschluss der Dekorlagen erfolgt und das Spritzgussteil in dem Nahtbereich durch die Dekorlagen sicher von der Umgebung bedeckt ist. Dies kann insbesondere dadurch erreicht werden, dass die Schutzschicht und die Kleberschicht, insbesondere die Kleberschicht der zweiten Dekorlage und die Schutzschicht der ersten Dekorlage, mit verwandten Bindemitteln aufgebaut sind. Hierzu können die Schichten beispielsweise Acrylat-Bindemittel aufweisen.

Die Beurteilung der Haftung an den Nahtstellen, insbesondere im Überlappungsbereich der ersten und der zweiten Dekorlage, kann auf unterschiedliche Weise geschehen und umfasst insbesondere eine qualitative Einschätzung. Als geeignet hat sich insbesondere der Haftungstest und der Gitterschnitttest erwiesen. Beim Haftungstest wird ein Tesafilm 4104 mit 14 mm Breite verwendet, der blasenfrei durch dreimaliges Aufstreichen mit der Daumenkuppe auf die dekorierte Fläche an einem Testteil angedrückt wird. Nach dem Aufstreichen wird das Tesafilm zügig in einem Winkel von 45° bis 60° manuell "weg vom Körper" abgezogen. Sind nach dem Test noch 95 % des Lackpaketes auf dem Testteil vorhanden, ist die Dekoration als "Gut" zu bezeichnen.

Beim Gitterschnittest wird eine quadratische Struktur mit einem Gitterschneider (insbesondere mit 6 Schneiden) in die dekorierte Oberfläche des Testteils geschnitten, wodurch eine Mehrzahl an Quadraten in der Schicht bzw. in der Oberfläche entsteht. Anschließend wird ein Tesafilm 4104 mit 14 mm Breite blasenfrei durch 3-maliges Aufstreichen mit der Daumenkuppe auf der geschnittenen Stelle angedrückt. Nach dem Aufstreichen wird das Tesafilm ebenfalls zügig in einem Winkel von 45° bis 60° manuell "weg vom Körper" abgezogen. Anhand der am Tesafilm anhaftenden Lackpakete bzw. Teilchen der Schicht wird die Haftung beurteilt.

Von Vorteil ist es, wenn die zweite Prägefolie und/oder die erste Prägefolie so ausgebildet sind, dass diese flake-frei abprägbar sind. Unter Flakes sind vorliegend insbesondere sehr kleine, absplitternde Partikel zu verstehen, die beim Herausreißen von Bereichen der Dekorlage während der Präge-Übertragung entstehen können und bei einem möglichen, sich anschließenden Druckvorgang unter Umständen erheblich stören, da sie zu einem unsauberem Druck führen können.

In einer vorteilhaften Ausführung sind die ersten und zweiten Dekorlagen gleich ausgebildet, weisen bevorzugt dieselbe Farbschicht und/oder Metallisierung, auf. Hierdurch erhält man ein Formteil, das eine homogene Erscheinung aufweist und somit ein qualitativ hochwertiges Aussehen besitzt. Obwohl das Spritzgussteil mit mehreren, insbesondere nebeneinander angeordneten Dekorlagen dekoriert ist, weist es eine einheitliche Oberfläche auf, so dass der Betrachter meint, dass es sich um eine einzige zusammenhängende Dekorierung bzw. Dekorlage handelt. Das Kunststoffformteil lässt sich so als hochwertiges Produkt einsetzen.

In einer anderen Ausführung sind die ersten und zweiten Dekorlagen unterschiedlich ausgebildet und weisen insbesondere eine unterschiedliche Farbe und/oder eine unterschiedliche Metallisierung auf. Hierdurch erhält man ein Formteil, das auf unterschiedlich angeordneten Teilflächen auch unterschiedliches Aussehen aufweist. Dabei kann es vorgesehen sein, dass die erste und zweite Dekorlage optisch deutlich voneinander unterscheidbar sind und beispielsweise unterschiedliche Farben, Motive, Muster, Schriften oder ähnliches aufweisen. Beispielsweise kann die erste Dekorlage eine vollflächige Metallisierung aufweisen und die zweite Dekorlage ein farbiges und/oder metallisiertes Muster oder die erste Dekorlage weist ein farbiges und/oder metallisiertes Muster auf und die zweite Dekorlage weist eine vollflächige Metallisierung auf.

Weitere Beispiele sind optisch, insbesondere in Bezug auf Kontrast und/oder Farbsättigung und/oder Farbton aufeinander abgestimmte Farbtöne und/oder Muster der ersten Dekorlage in einem ersten Farbton und/oder einem ersten Muster und die zweite Dekorlage in einem zweiten Farbton und/oder einem zweiten Muster, wobei bevorzugt beide Farbtöne und/oder Muster optisch harmonieren. Beispielsweise können das zueinander, passende Brauntöne oder zueinander passende Holzdekore oder Marmordekore sein.

Weiter ist es möglich, dass derartige farblich abgestimmte erste und zweite Dekorlagen weiter mit entsprechenden, insbesondere partiell angeordneten, mattierenden und/oder glänzenden, Funktionsschichten und/oder mit Softtouch-Funktionsschichten ergänzt werden. Dabei ist es auch möglich, dass diese, insbesondere partiell angeordneten, mattierenden und/oder glänzenden, Funktionsschichten und/oder Softtouch-Funktionsschichten passergenau bzw. registergenau zu Mustern der ersten und/oder zweiten Dekorlage angeordnet sind.

Es kann aber auch vorgesehen sein, dass die erste und die zweite Dekorlage optisch nur gering voneinander abweichen und beispielsweise nur eine geringfügig voneinander abweichende Helligkeit und/oder Farbigkeit und/oder Rauigkeit und/oder Mattheit und/oder Transparenz und/oder Taktilität und/oder ein geringfügig voneinander abweichendes Reflexionsvermögen und/oder Absorptionsvermögen aufweisen. Dadurch können die unterschiedlich angeordneten Teilflächen des Kunststoffformteils beispielsweise dezent voneinander abgesetzt werden. Es ist aber auch möglich, dass dadurch die unterschiedlich angeordneten Teilflächen des Kunststoffformteils aneinander angeglichen werden, weil beispielsweise die Teilflächen bei einer Betrachtung jeweils unter etwas unterschiedlichen Winkeln wahrgenommen werden. Durch die geringfügige Variation eines der oben genannten Oberflächenparameter kann ein besonders gleichmäßiges Erscheinungsbild des gesamten Kunststoffformteils erreicht werden.

Wenn die erste und zweite Dekorlage jeweils Motive, Muster, Schriften oder ähnliches aufweisen, kann es vorgesehen sein, die erste und die zweite Dekorlage relativ zueinander im Register auf dem Kunststoffformteil anzuordnen bzw. zu applizieren. Dadurch kann erreicht werden, dass die Motive, Muster, Schriften oder ähnliches von der ersten Dekorlage auf die zweite Dekorlage insbesondere ohne sichtbare Nahtstelle oder nahezu ohne sichtbare Nahtstelle ineinander übergehen. Damit kann der optische Eindruck einer einzigen zusammenhängenden Dekorierung bzw. Dekorlage erreicht und/oder verbessert werden.

Unter Register oder Passer bzw. Registergenauigkeit oder Passergenauigkeit ist eine Lagegenauigkeit zweier oder mehrerer Elemente und/oder Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit zu erhöhen. Die lagegenaue Positionierung kann dabei insbesondere mittels sensorischer, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Bevorzugt wird das Spritzgussteil im Wesentlichen zylinderförmig ausgebildet. Es ist aber auch denkbar, dass das Spritzgussteil rotationsförmig, kuppelförmig, kegelförmig bzw. kegelstumpfförmig ausgebildet ist. Das Spritzgussteil kann insbesondere als Hohlkörper ausgebildet werden.

Vorteilhafterweise wird zumindest eine Grundfläche und/oder eine Deckfläche des Spritzgussteils zumindest bereichsweise, bevorzugt im Wesentlichen komplett, mit der ersten Dekorlage dekoriert. Hierdurch erhält man ein Formteil bzw. ein Spritzgussteil mit einer dekorierten Grundfläche und/oder einer dekorierten Deckfläche.

Die Deckfläche und/oder die Grundfläche des Spritzgussteils kann vorteilhafterweise zumindest bereichsweise, insbesondere im Wesentlichen komplett gewölbt ausgebildet sein.

Die Länge der Wölbung, insbesondere die Strecke zwischen einer Seite der Wölbung und einer gegenüberliegenden Seite der Wölbung entlang der Wölbung, ist bevorzugt maximal doppelt so lang, bevorzugt um maximal 50 % länger wie die kürzeste Strecke zwischen den gegenüberliegenden Seiten der Wölbung. Bei der kürzesten Strecke handelt es sich insbesondere um die Länge der Projektion bzw. die Länge des Urbilds der Wölbung. Handelt es sich um ein im Wesentlichen zylinderförmiges Spritzgussteil mit einer kuppelförmigen Fläche, insbesondere einer kuppelförmig ausgebildeten Deckfläche, dann stellt der Durchmesser der Grundfläche des Spritzgussteils insbesondere die kürzeste Strecke dar.

Weiter ist es möglich, dass zusätzlich bzw. überlagert zu dieser Wölbung das Spritzgussteil eine Strukturierung aufweist, wobei diese Strukturierung bevorzugt eine maximale Tiefe von 1000 µm, weiter bevorzugt eine maximale Tiefe von 300 µm, aufweist. Vorteilhafterweise liegt die minimale Strukturperiode oder der minimale Abstand zweier benachbarter Strukturflanken dabei bei etwa 10 nm.

Hierbei ist es möglich, dass die Struktur dabei ein relativ zu der Wölbung erhabenes und/oder vertieftes Motiv darstellt, wie beispielsweise ein Logo, Muster, Schriften oder ähnliches. Auch ist es möglich, dass die Struktur alternativ oder zusätzlich als Mattstruktur und/oder Narbung und/oder Aufrauung ausgebildet ist, welche insbesondere die Wölbung überlagert. Vorzugsweise können in Abhängigkeit der gewählten Strukturparameter und/oder der Anordnung der Strukturelemente in periodischer, pseudo-zufälliger oder zufälliger Weise damit unterschiedliche optisch und/oder haptisch wahrnehmbare Effekte erzeugt werden, wobei insbesondere die Strukturen auch das entsprechende Dekor, vorzugsweise die erste und/oder Dekorlage, in der optischen Wirkung bzw. in dessen optischen Effekt unterstützen können. Beispielsweise kann eine Mattstruktur und/oder Narbung und/oder Aufrauung kombiniert werden mit einer funktionalen Softtouch-Funktionsschicht und einer entsprechenden Dekorlage, um insbesondere eine besondere optische und/oder taktile Anmutung zu erreichen.

Weiter kann beispielsweise eine metallisierte Dekorlage mit einer Narbung und/oder Aufrauung und/oder anderweitig vorteilhaft ausgebildeten Struktur so kombiniert werden, dass insbesondere ein Glitzereffekt oder Glittereffekt erzeugt wird. Die Struktur kann dabei vollflächig oder auch nur partiell vorhanden sein. Bei einer partiellen Aufbringung der Struktur ist es möglich, dass die Kombination aus Metallspiegel (ohne Struktur) und benachbartem Glitzereffekt oder Glittereffekt besonders eindrucksvoll wirkt. Ein weiterer positiver Nebeneffekt einer solchen Struktur auf einer metallisierten Dekorlage ist bevorzugt das optische Unterdrücken oder optische Kaschieren von kleinsten Fehlern, z.B. Mikro-Löchern in der Metallisierung.

Bevorzugt wird zumindest ein Bereich einer Mantelfläche des Spritzgussteils, bevorzugt im Wesentlichen die gesamte Mantelfläche des Spritzgussteils mit der zweiten Dekorlage dekoriert. Hierdurch erhält man ein Formteil bzw. ein Spritzgussteil mit einer zumindest bereichsweise dekorierten Mantelfläche. Insbesondere dekoriert die zweite Dekorlage zumindest einen Teil der Deck- und/der Grundfläche. Vorteilhafterweise dekoriert die zweite Dekorlage zumindest bereichsweise die Grund- und/oder Deckfläche und die Mantelfläche. Idealerweise dekoriert die zweite Dekorlage die Grund- und/oder Deckfläche bereichsweise und die Mantelfläche im Wesentlichen komplett.

Der Spritzgussvorgang bzw. das Hinterspritzen erfolgt bevorzugt bei einer Temperatur von 180°C bis 350°C, besonders bevorzugt bei einer Temperatur von 220°C bis 280°C, und/oder bevorzugt bei einem Spritzdruck von 800 bar bis 3000 bar, besonders bevorzugt bei einem Spritzdruck von 1200 bar bis 2200 bar, und/oder bevorzugt bei einer Einspritzzeit von 0,5 Sekunden bis 30 Sekunden, besonders bevorzugt bei einer Einspritzzeit von 0,5 Sekunden bis 5 Sekunden. Unter Einspritzzeit wird die Zeit zwischen Beginn und Ende der Füllung der Spritzgussform mit dem Spritzgussmaterial verstanden und umfasst insbesondere nicht die nachfolgend zusätzlich erforderliche Abkühlzeit, die insbesondere von der Wandstärke des Spritzgussteils abhängig ist.

Das Heißprägen erfolgt bevorzugt bei einer Prägetemperatur von 80°C bis 250°C, besonders bevorzugt bei einer Prägetemperatur von 120°C bis 210°C, und/oder bevorzugt bei einem Prägedruck von 1 N/mm² bis 10 N/mm², besonders bevorzugt bei einem Prägedruck von 3 N/mm² bis 5 N/mm², und/oder bevorzugt bei einer Prägekraft von 1000 N bis 10000 N, besonders bevorzugt bei einer Prägekraft von 3000 N bis 5000 N, und/oder bevorzugt bei einer Prägegeschwindigkeit von 1 m/min bis 10 m/min, besonders bevorzugt bei einer Prägegeschwindigkeit von 4 m/min bis 6 m/min.

Im Folgenden wird die Erfindung anhand von mehreren Ausführungsbeispielen unter Zuhilfenahme der beiliegenden Figuren beispielhaft erläutert. Dabei zeigen:
- Fig. 1: Flussdiagramm eines Verfahrens zur Herstellung eines Kunststoffformteils
- Fig. 2: Flussdiagramm zweier möglicher Verfahren zur Herstellung eines Kunststoffzwischenprodukts
- Fig. 3: schematische Darstellung eines Kunststoffformteils in einer Ausgestaltung
- Fig. 4: schematische Darstellung einzelner Verfahrensschritte zur Herstellung eines Kunststoffformteils in einer weiteren Ausgestaltung

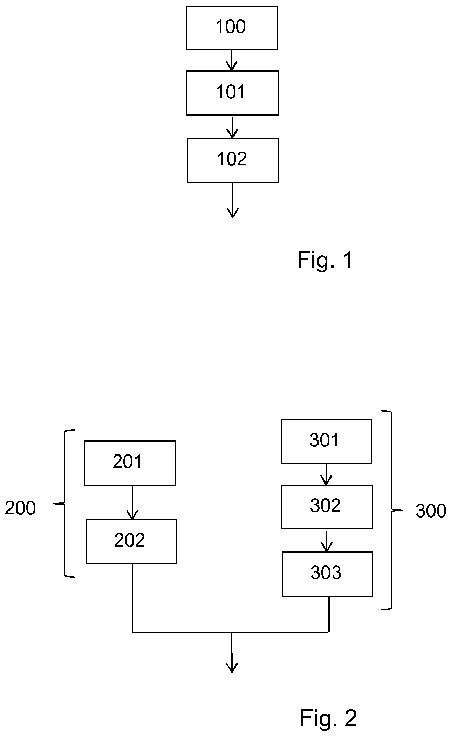

Die Figur 1 zeigt ein Flussdiagramm eines Verfahrens zur Herstellung eines Kunststoffformteils 1 mit einer dekorierten Oberfläche. In einem Schritt 100 wird ein Kunststoffzwischenprodukt 10 aufweisend ein Spritzgussteil 12 und zumindest eine erste Dekorlage 16, insbesondere zumindest eine erste Dekorlage 16 einer ersten Prägefolie 14, bereitgestellt. Die Dekorlage 16 ist dabei bevorzugt zumindest in einem ersten Oberflächenbereich 22 des Spritzgussteils 12 angeordnet. In einem Schritt 101 erfolgt das Bereitstellen einer zweiten Prägefolie 18 mit einer zweiten Dekorlage 24. In einem Schritt 102 wird dann die zweite Prägefolie 18 und das Kunststoffzwischenprodukt 10 und/oder das Spritzgussteil 12 in zumindest einem zweiten Oberflächenbereich 24 des Spritzgussteils 12 heißgeprägt. Nachdem es zu einem festen Verbund zwischen zweiter Prägefolie 18 und Spritzgussteil 12 bzw. Kunststoffzwischenprodukt 10 gekommen worden ist, wird bevorzugt eine Trägerlage der zweiten Prägefolie 18 abgezogen. Durch das Abziehen der Trägerlage stellt die zweite Dekorlage 20 eine oberste Schicht des Kunststoffformteils 1 dar und sorgt somit im Wesentlichen für den optischen Eindruck des Kunststoffformteils 1, insbesondere im Zusammenhang mit der ersten Dekorlage 16.

Die Figur 2 zeigt zwei mögliche Verfahren 200, 300 zur Herstellung des Kunststoffzwischenprodukts 10. Bei dem ersten Verfahren 200 wird in einem ersten Schritt 201 die erste Prägefolie 14 mit der ersten Dekorlage 16 in eine Kavität einer Spritzgusswerkzeugform 50 angeordnet bzw. eingebracht. In einem nachfolgenden Schritt 202 wird die erste Prägefolie 14 mit einer Kunststoffmasse zumindest bereichsweise hinterspritzt. Hierdurch entsteht das Kunststoffzwischenprodukt 10, wobei die erste Prägefolie 14 und/oder die erste Dekorlage 16 zumindest in dem ersten Oberflächenbereich 22 des Spritzgussteils 12 mit dem Spritzgussteil 12 verbunden ist. Nachdem es zu einem Verbund zwischen erster Prägefolie 14 und Kunststoffmasse bzw. Spritzgussteil 12 gekommen ist, wird bevorzugt eine Trägerlage der ersten Prägefolie 14 von der ersten Dekorlage 16 bzw. von dem Spritzgussteil 12 abgezogen. Durch das Abziehen der Trägerlage stellt die erste Dekorlage 16 nun die oberste Schicht des Kunststoffzwischenprodukts 10 dar und sorgt somit im Wesentlichen für den optischen Eindruck des Kunststoffzwischenprodukts 10.

Bei dem zweiten Verfahren 300 wird in einem ersten Schritt 301 das Spritzgussteil 12 mittels Spritzguss hergestellt. In einem Schritt 302 wird dann die erste Prägefolie 14 mit der ersten Dekorlage 16 über zumindest den ersten Oberflächenbereich 22 des Spritzgussteils 12 angeordnet. In einem Schritt 303 wird die erste Prägefolie 14 und/oder die erste Dekorlage 16 mit dem Spritzgussteil 12 heißgeprägt. Hierdurch entsteht das Kunststoffzwischenprodukt 10, wobei die erste Prägefolie 14 und/oder die erste Dekorlage 16 zumindest in dem ersten Oberflächenbereich 22 des Spritzgussteils 12 mit dem Spritzgussteil 12 verbunden ist. Nachdem es zu einem Verbund zwischen erster Prägefolie 14 und Kunststoffmasse bzw. Spritzgussteil 12 gekommen ist, wird bevorzugt die Trägerlage der ersten Prägefolie 14 von der ersten Dekorlage 16 bzw. von dem Spritzgussteil 12 abgezogen. Durch das Abziehen der Trägerlage stellt die erste Dekorlage 16 nun die oberste Schicht des Kunststoffzwischenprodukts 10 dar und sorgt somit im Wesentlichen für den optischen Eindruck des Kunststoffzwischenprodukts 10.

Die Trägerlage der ersten und/oder zweiten Prägefolie 14, 18 sorgt insbesondere dafür, dass die Prägefolien 14, 18 eine ausreichende Stabilität haben und sich somit sicher verarbeiten lassen. Die Trägerlage besteht bevorzugt aus PET oder Polypropylen, Polystyrol, PVC, PMMA, ABS oder Polyamid. Insbesondere weist die Trägerlage eine Schichtdicke von 6 µm bis 250 µm, bevorzugt eine Schichtdicke von 12 µm bis 100 µm, besonders bevorzugt eine Schichtdicke von 19 µm bis 75 µm, auf. Idealerweise beträgt die Schichtdicke der Trägerlage der ersten Prägefolie 14 ca. 75 µm und/oder die Trägerlage der zweiten Prägefolie 18 ca. 19 µm.

Bevorzugt weist die erste 14 und/oder die zweite 18 Prägefolie eine Ablöseschicht auf. Die Ablöseschicht sorgt für eine saubere Trennung zwischen Trägerlage und den Dekorlagen 16, 20. Die Ablöseschicht umfasst insbesondere Wachs, wachshaltige Verbindungen, Fettsäureester und/oder Motansäureester. Die Ablöseschicht kann eine Schichtdicke von 0,001 µm bis 1 µm, bevorzugt eine Schichtdicke von 0,001 µm bis 0,1 µm, besonders bevorzugt eine Schichtdicke von ca. 0,01 µm, aufweisen.

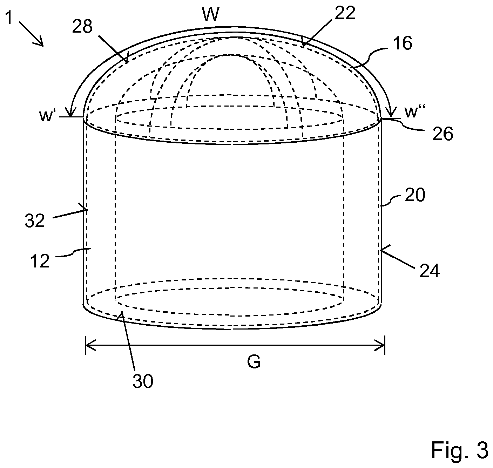

Figur 3 zeigt eine schematische Darstellung eines Kunststoffformteils 1 in einer Ausgestaltung. Das Kunststoffformteil 1 umfasst ein Spritzgussteil 12 mit zumindest einem ersten 22 und einem zweiten 24 Oberflächenbereich. Ferner weist das Kunststoffformteil 1 eine erste Dekorlage 16, insbesondere eine erste Dekorlage 16 einer ersten Prägefolie 14, und eine zweite Dekorlage 20, insbesondere eine zweite Dekorlage 20 einer zweiten Prägefolie 18, auf. Bevorzugt ist die erste Dekorlage 16 zumindest in dem ersten Oberflächenbereich 22 und die zweite Dekorlage 20 zumindest in dem zweiten Oberflächenbereich 24 angeordnet.

Das in der Figur 3 gezeigte Dickenverhältnis zwischen Dekorlagen 16, 20 und Spritzgussteil 12 ist prinzipiell nicht realitätsecht, da die Schichtdicken der Dekorlagen 16, 20 wesentlich dünner sind als die Dicke des Spritzgussteils 12. Sie können grundsätzlich vernachlässigt werden und wirken sich auf die Dicke des Kunststoffformteils 1 quasi nicht aus. Im Wesentlichen stellt die Dicke des Spritzgussteils 12 die Dicke des Kunststoffformteils 1 dar.

Die erste Dekorlage 16 und die zweite Dekorlage 20 bzw. die zweite Prägefolie 18 treffen insbesondere in einem Nahtbereich 26 zusammen. Die Dekorlagen 16, 20 werden bevorzugt so auf dem Spritzgussteil 12 aufgebracht, dass die zweite Prägefolie 18 bzw. die zweite Dekorlage 20 unmittelbar an die erste Dekorlage 16 angrenzt. Hierdurch kann ein nahtloser Übergang der Dekorlagen 16, 20 ineinander erreicht werden. Bei Betrachtung des dekorierten Kunststoffformteils 1 wird hierdurch der Eindruck erweckt, dass eine durchgehende bzw. einzige Dekorierung vorliegt.

Vorteilhafterweise kann die zweite Prägefolie 18 bzw. die zweite Dekorlage 20 aber auch so aufgebracht werden, dass die zweite Prägefolie 18 bzw. die zweite Dekorlage 20 die erste Dekorlage 16 bereichsweise überlappt. Hierdurch wird insbesondere sichergestellt, dass das Spritzgussteil 12 nicht sichtbar ist. Bei der Fertigung des Spritzgussteils 12 spielen somit optische Erscheinungen bzw. Eigenschaften des gefertigten Spritzgussteils 12, wie beispielsweise Farbgebung, Oberflächenerscheinungen wie Schlieren, Glanzunterschiede und/oder Freistrahlbildung eine untergeordnete Rolle, was die Fertigung des Spritzgussteils 12 erleichtert und auch verbilligt.

Insbesondere überlappt die zweite Prägefolie 18 bzw. die zweite Dekorlage 20 die erste Dekorlage 16 um maximal 5 mm, bevorzugt um maximal 2 mm, besonders bevorzugt um maximal 1 mm. Es ist aber auch durchaus denkbar, dass die erste Dekorlage 16 die zweite Dekorlage 20 wenigstens bereichsweise überlappt.

Die erste 16 und/oder die zweite 20 Dekorlage weisen bevorzugt eine Metallisierung auf. Die Metallisierung umfasst insbesondere Aluminium, Kupfer, Chrom und/oder Zinn. Die Metallisierung kann eine Schichtdicke bevorzugt von 5 nm bis 100 nm, insbesondere bevorzugt eine Schichtdicke von 5 nm bis 50 nm, besonders bevorzugt eine Schichtdicke von ca. 40 nm, aufweisen.

Die erste 16 und/oder die zweite 20 Dekorlage kann auch eine Farbschicht aufweisen. Die Farbschicht umfasst insbesondere Pigmente und/oder Farbstoffe. Bevorzugt weist die Farbschicht eine Schichtdicke von 0,4 µm bis 10 µm, insbesondere bevorzugt eine Schichtdicke von 0,6 µm bis 3 µm, auf. Idealerweise weist die Farbschicht der ersten Dekorlage 16 eine Schichtdicke von ca. 1,6 µm und die Farbschicht der zweiten Dekorlage 20 eine Schichtdicke von ca. 1,8 µm auf.

Es ist auch vorstellbar, dass die erste 16 und/oder die zweite 20 Dekorlage zumindest eine Funktionsschicht aufweisen. Funktionsschichten sind beispielsweise elektrisch leitende Schichten (Metall, ITO = Indium Tin Oxide), elektrisch halbleitende Schichten (z. B. Halbleiterpolymere), elektrisch nichtleitende Schichten (elektrisch isolierende Lackschichten), optisch mattierende oder anti-reflektierend wirkende Schichten (z. B. mikroskopische Mattstrukturen).

Bevorzugt weist die erste 16 und/oder die zweite 20 Dekorlage eine Haftvermittlerschicht auf. Die Schichtdicke der Haftvermittlerschicht kann zwischen 0,05 µm und 5 µm, bevorzugt zwischen 0,4 µm und 0,6 µm und besonders bevorzugt ca. 0,2 µm, betragen.

Insbesondere weist die erste 16 und/oder die zweite 20 Dekorlage eine Schutzschicht auf. Die Schutzschicht weist insbesondere eine Schichtdicke von 0,4 µm bis 10 µm, bevorzugt eine Schichtdicke von 0,6 µm bis 2 µm, insbesondere bevorzugt eine Schichtdicke von ca. 0,9 µm auf. Vorteilhaft ist es, wenn nur die zweite Dekorlage 20 eine Schutzschicht aufweist.

Bevorzugt weist die erste 16 und/oder die zweite 20 Dekorlage eine ein- oder mehrschichtige Kleberschicht auf. Die Kleberschicht sorgt insbesondere für eine ausreichend gute Haftung zwischen den Dekorlagen 16, 20 und dem Spritzgussteil 12 und/oder zwischen den Dekorlagen 16, 20 untereinander. Die Schichtdicke der Kleberschicht beträgt bevorzugt zwischen 0,4 µm und 10 µm, besonders bevorzugt zwischen 0,6 µm und 3 µm. Von Vorteil ist es, wenn die Kleberschicht der ersten Dekorlage 16 ca. 1,9 µm und/oder die Kleberschicht der zweiten Dekorlage 20 ca. 2,2 µm beträgt.

Vorteilhafterweise sind die Kleberschichten und die Schutzschichten, insbesondere die auf dem hergestellten Formteil 1 aneinander angrenzende Kleber- und Schutzschichten, so ausgebildet, dass sie ausreichend gut aneinander haften. Hierdurch kann eine optimale Verbindung zwischen den Dekorlagen 16, 20 erreicht werden, so dass sichergestellt werden kann, dass ein sauberer Abschluss der Dekorlagen 16, 20 erfolgt und das Spritzgussteil 12 insbesondere in dem Nahtbereich 26 durch die Dekorlagen 16, 20 sicher von der Umgebung bedeckt bzw. geschützt wird. Dies kann insbesondere dadurch erreicht werden, dass die Schutzschicht und die Kleberschicht, insbesondere die Kleberschicht der zweiten Dekorlage 20 und die Schutzschicht der ersten Dekorlage 16, mit verwandten Bindemitteln aufgebaut sind. Hierzu können die Schichten Acrylat-Bindemittel aufweisen.

Idealerweise sind die erste 16 und zweite Dekorlagen 20 gleich ausgebildet. Vorteilhafterweise weisen die Dekorlagen 16, 20 dieselbe Farbschicht und/oder dieselbe Metallisierung auf. Hierdurch erhält man ein Formteil 1, das eine homogene Erscheinung aufweist und somit insgesamt ein qualitativ hochwertiges Aussehen besitzt. Obwohl das Spritzgussteil 12 mit mehreren Dekorlagen 16, 20 dekoriert ist, weist es eine einheitliche Oberfläche auf. Das Kunststoffformteil 1 kann somit als hochwertiges Produkt gehandhabt werden.

Das in Figur 3 gezeigte Spritzgussteil 12 ist im Wesentlichen als zylinderförmiger Hohlkörper ausgebildet. Das Spritzgussteil 12 weist eine Mantelfläche 32 und eine Grundfläche 30 auf. Ferner weist das Spritzgussteil 12 eine Deckfläche 28 auf. Die Deckfläche 28 ist kuppelförmig ausgebildet und weist eine Wölbung W auf.

Vorteilhafterweise ist zumindest die Deckfläche 28 des Spritzgussteils 12 im Wesentlichen komplett mit der ersten Dekorlage 16 dekoriert bzw. von dieser bedeckt. Des Weiteren ist bevorzugt die Mantelfläche 32 des Spritzgussteils 12 im Wesentlichen komplett mit der zweiten Dekorlage 20 dekoriert bzw. von dieser bedeckt. Ferner kann die zweite Dekorlage 20 zumindest bereichsweise noch die Deckfläche 28 dekorieren bzw. bedecken.

In Figur 3 ist die Länge der Wölbung der Deckfläche 28 des Spritzgussteils 12 mit W gekennzeichnet. W ist dabei die Strecke entlang der Wölbung W zwischen einer Seite der Wölbung w' bzw. des Spritzgussteils 12 und einer gegenüberliegenden Seite der Wölbung w" bzw. des Spritzgussteils 12. Bevorzugt ist die Strecke maximal doppelt so lang, bevorzugt um maximal 50 % länger wie eine kürzeste Strecke zwischen den gegenüberliegenden Seiten der Wölbung. Bei der kürzesten Strecke handelt es sich in Figur 3 um den Durchmesser der Grundfläche 30 des Spritzgussteils 12, dieser ist mit G bezeichnet.

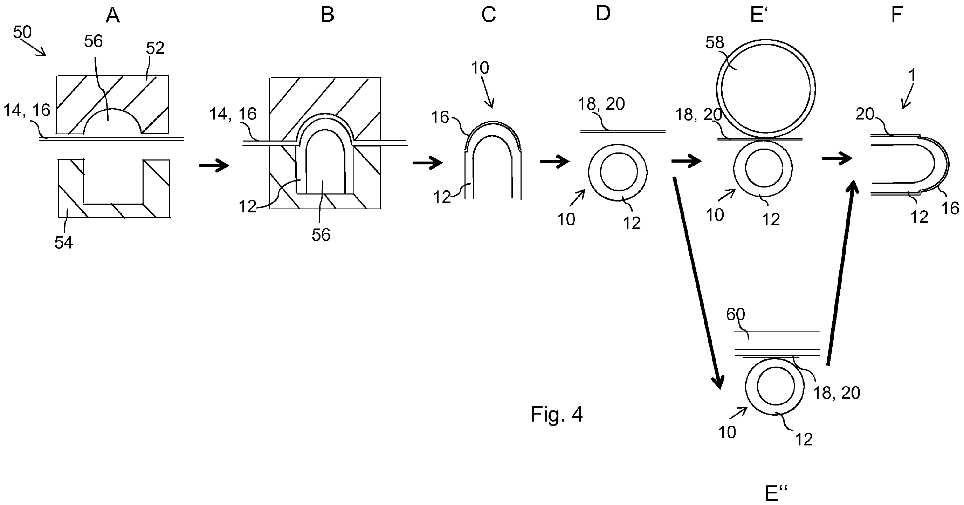

Figur 4 zeigte eine schematische Darstellung einzelner Verfahrensschritte A bis F zur Herstellung eines Kunststoffformteils 1 in einer Ausgestaltung.

Im Verfahrensschritt A wird die erste Prägefolie 14 mit der ersten Dekorlage 16 in eine Kavität 56 einer Spritzgusswerkzeugform 50 angeordnet bzw. eingebracht. Die Kavität 56 wird durch eine erste Werkzeughälfte 52 der Spritzgusswerkzeugform 50 und eine zweite Werkzeughälfte 54 der Spritzgusswerkzeugform 50 gebildet. Im Verfahrensschritt B wird die Spritzgusswerkzeugform 50 geschlossen und die erste Prägefolie 14 wird mit einer Kunststoffmasse zumindest bereichsweise hinterspritzt. Nachdem es zu dem Verbund zwischen erster Prägefolie 14 und Kunststoffmasse bzw. Spritzgussteil 12 gekommen ist, wird bevorzugt eine Trägerlage der ersten Prägefolie 14 von der ersten Dekorlage 16 bzw. von dem Spritzgussteil 12 abgezogen. Verfahrensschritt C zeigt das gefertigte Kunststoffzwischenprodukt 10.

Anstelle der Herstellung des Kunststoffzwischenprodukts 10 mit dem IMD-Verfahren (Verfahrensschritte A und B), kann das Kunststoffzwischenprodukt auch mit dem in Figur 2 dargestellten zweiten Verfahren 300 hergestellt werden. Das Spritzgussteil 12 wird hier in einem ersten Schritt hergestellt und die Dekorierung mit einer ersten Prägefolie 14 erfolgt in einem gesonderten, nachfolgenden Schritt.

In Figur 4 wird im Verfahrensschritt D die zweite Prägefolie 18 mit der zweiten Dekorlage 20 bereitgestellt, wobei die zweite Prägefolie 18 dabei insbesondere über zumindest den zweiten Oberflächenbereich 24 des Spritzgussteils 12 angeordnet wird.

In den Verfahrensschritten E' bzw. E" erfolgt das Heißprägen der zweiten Prägefolie 18 auf das Kunststoffzwischenprodukt 10. Im Verfahrensschritt E' erfolgt das Prägen mittels Abrollprägung mit einem Heißprägerad 58. Im Verfahrensschritt E" erfolgt das Prägen mittels Abrollprägung mit einem Heißprägestempel 60. Das Heißprägerad 58 bzw. der Heißprägestempel 60 sind dabei bevorzugt zumindest so breit wie der zweite Oberflächenbereich 24 bzw. die Zylindermantelfläche des Spritzgussteils 12. Insbesondere ist das Heißprägerad 58 bzw. der Heißprägestempel 60 etwas breiter, sodass das Heißprägerad 58 bzw. der Heißprägestempel 60 durch den Prägedruck die zweite Prägefolie 18 zumindest teilweise etwas über den Rand der Zylindermantelfläche bzw. den zweiten Oberflächenbereich 24 des Spritzgussteils 12 herumdrückt. Das Prägerad 58 bzw. der Heißprägestempel 60 kann aus nachgiebigen Silikon oder Kunststoff, insbesondere mit einer Härte von Shore A 60 bis A 95, bevorzugt Shore A 75 bis Shore A 90, ausgebildet sein.

Nachdem ein fester Verbund zwischen zweiter Prägefolie 18 und Spritzgussteil 12 bzw. Kunststoffzwischenprodukt 10 hergestellt worden ist, wird bevorzugt eine Trägerlage der zweiten Prägefolie 18 abgezogen. Man erhält somit bevorzugt das fertige Kunststoffformteil 1 aufweisend das Spritzgussteil 12 sowie die erste Dekorlage 16 und die zweite Dekorlage 20 (Verfahrensschritt F). Bevorzugt dekoriert die erste Dekorlage 16 die Deckfläche des Spritzgussteils 12 und die zweite Dekorlage 20 die Mantelfläche des Spritzgussteils 12.

### Bezugszeichenliste

- 1: Kunststoffformteil
- 10: Kunststoffzwischenprodukt
- 12: Spritzgussteil
- 14: erste Prägefolie
- 16: erste Dekorlage
- 18: zweite Prägefolie
- 20: zweite Dekorlage
- 22: erster Oberflächenbereich
- 24: zweiter Oberflächenbereich
- 26: Nahtbereich bzw. Überlappungsbereich der Dekorlagen
- 28: Deckfläche
- 30: Grundfläche
- 32: Mantelfläche
- 50: Spritzgusswerkzeugform
- 52: erste Werkzeughälfte
- 54: zweite Werkzeughälfte
- 56: Kavität
- 58: Heißprägerad
- 60: Heißprägestempel
- 100: Bereitstellen eines Kunststoffzwischenprodukts
- 101: Bereitstellen einer zweiten Prägefolie
- 102: Heißprägen zweite Prägefolie auf Kunststoffzwischenprodukt
- 200: erstes Verfahren
- 201: Einbringen erste Prägefolie in Kavität
- 202: Hinterspritzen erste Prägefolie
- 300: zweites Verfahren
- 301: Herstellen Spritzgussteil
- 302: Anordnen der ersten Prägefolie
- 303: Heißprägen erste Prägefolie auf Spritzgussteil
- W: Länge Wölbung
- G: Länge bzw. Durchmesser Grundfläche

## Patentansprüche

1. Verfahren zur Herstellung eines Kunststoffformteils (1) mit einer dekorierten Oberfläche aufweisend die Schritte:
- Bereitstellen eines Kunststoffzwischenprodukts (10) aufweisend ein Spritzgussteil (12) und zumindest eine erste Dekorlage (16),
- Bereitstellen einer zweiten Prägefolie (18) mit einer zweiten Dekorlage (20),
- Heißprägen der zweiten Prägefolie (18) auf das Kunststoffzwischenprodukt (10) und/oder auf das Spritzgussteil (12), wobei das Kunststoffzwischenprodukt (10) durch zumindest die folgenden Schritte hergestellt wird:
- Anordnen bzw. Einbringen einer ersten Prägefolie (14) mit der ersten Dekorlage (16) in eine Kavität (56) einer Spritzgusswerkzeugform (50),
- zumindest bereichsweises Hinterspritzen der ersten Prägefolie (14) mit einer Kunststoffmasse.

2. Verfahren nach Anspruch 1,
**dadurch gekennzeichnet ,**
**dass** die zweite Prägefolie (18) bzw. die zweite Dekorlage (20) der zweiten Prägefolie (18) derart auf das Kunststoffzwischenprodukt (10) aufgebracht wird, dass die zweite Prägefolie (18) bzw. die zweite Dekorlage (20) unmittelbar an die erste Dekorlage (16) angrenzt.

3. Verfahren nach einem der vorangehenden Ansprüche,
**gekennzeichnet durch**
das Bereitstellen der ersten (16) und/oder zweiten (20) Dekorlage aufweisend eine Metallisierung, insbesondere umfassend Aluminium, wobei die Metallisierung bevorzugt eine Schichtdicke von 5 nm bis 100 nm, besonders bevorzugt eine Schichtdicke von 5 nm bis 50 nm, aufweist.

4. Verfahren nach einem der vorangehenden Ansprüche,
**gekennzeichnet durch**
das Bereitstellen der ersten (16) und zweiten (20) Dekorlage, wobei die Dekorlagen (16, 20) gleich ausgebildet sind.

5. Verfahren nach einem der vorangehenden Ansprüche,
**dadurch gekennzeichnet,**
**dass** das Spritzgussteil (12) im wesentlichen zylinderförmig ausgebildet wird.

6. Verfahren nach einem der vorangehenden Ansprüche,
**dadurch gekennzeichnet,**
**dass** zumindest eine Deckfläche (28) und/oder eine Grundfläche (30) des Spritzgussteils (12) mit der ersten Dekorlage (16) zumindest bereichsweise, insbesondere im Wesentlichen komplett, dekoriert wird.

7. Verfahren nach einem der vorangehenden Ansprüche,
**dadurch gekennzeichnet,**
**dass** zumindest ein Bereich einer Mantelfläche (32) des Spritzgussteils (12), bevorzugt im Wesentlichen die gesamte Mantelfläche (32) des Spritzgussteils (12) mit der zweiten Dekorlage (20) dekoriert wird.

8. Kunststoffformteil (1), erhältlich durch ein Verfahren nach einem der vorangehenden Ansprüche, umfassend ein Spritzgussteil (12) mit zumindest einem ersten (22) und einem zweiten (24) Oberflächenbereich, eine erste Dekorlage (16) und eine zweite Dekorlage (20), wobei die erste Dekorlage (16) zumindest in dem ersten Oberflächenbereich (22) und die zweite Dekorlage (20) zumindest in dem zweiten Oberflächenbereich (24) angeordnet sind.

9. Kunststoffformteil (1) nach Anspruch 8,
**dadurch gekennzeichnet ,**
**dass** die erste Dekorlage (16) und die zweite Dekorlage (20) unmittelbar aneinander grenzen.

10. Kunststoffformteil (1) nach einem der Ansprüche 8 oder 9,
**dadurch gekennzeichnet ,**
**dass** die erste Dekorlage (16) und die zweite Dekorlage (20) gleich ausgebildet sind.

11. Kunststoffformteil (1) nach einem der Ansprüche 8 bis 10,
**dadurch gekennzeichnet ,**
**dass** die erste Dekorlage (16) zumindest bereichsweise eine Deckfläche (28) und/oder eine Grundfläche (30) des Spritzgussteils (12), bevorzugt im Wesentlichen die gesamte Deckfläche (20) und/oder im Wesentlichen die gesamte Grundfläche (30) des Spritzgussteils (12), dekoriert und/oder bedeckt.

12. Kunststoffformteil (1) nach einem der Ansprüche 8 bis 11,
**dadurch gekennzeichnet ,**
**dass** die zweite Dekorlage (20) zumindest einen Teil einer Mantelfläche (32) des Spritzgussteils (12), bevorzugt im Wesentlichen die gesamte Mantelfläche (32) des Spritzgussteils (12) dekoriert und/oder bedeckt.

13. Kunststoffformteil (1) nach einem der Ansprüche 8 bis 12,
**dadurch gekennzeichnet ,**
**dass** die zweite Dekorlage (20) zumindest einen Teil der Deckfläche (28) und/oder der Grundfläche (30) des Spritzgussteils (12) dekoriert und/oder bedeckt.

## Claims

1. Method for producing a plastic moulded part (1) having a decorated surface, having the following steps:
- providing a plastic intermediate product (10) having an injection moulded part (12) and at least one first decorative ply (16),
- providing a second stamping film (18) having a second decorative ply (20),
- hot stamping the second stamping film (18) onto the plastic intermediate product (10) and/or onto the injection moulded part (12), wherein the plastic intermediate product (10) is produced by at least the following steps:
- arranging or introducing a first stamping film (14) with the first decorative ply (16) in a cavity (56) of an injection moulding tool mould (50),
- at least regionally back-injecting the first stamping film (14) with a plastic mass.

2. Method according to claim 1,
**characterised in that**
the second stamping film (18) or the second decorative ply (20) of the second stamping film (18) is applied to the plastic intermediate product (10) in such a way that the second stamping film (18) or the second decorative ply (20) abuts directly on the first decorative ply (16).

3. Method according to one of the preceding claims,
**characterised by**
providing the first (16) and/or second (20) decorative ply having a metallisation, in particular comprising aluminium, wherein the metallisation preferably has a layer thickness of from 5nm to 100nm, particularly preferably a layer thickness of from 5nm to 50nm.

4. Method according to one of the preceding claims,
**characterised by**
providing the first (16) and second (20) decorative ply, wherein the decorative plies (16, 20) are formed identically.

5. Method according to one of the preceding claims,
**characterised in that**
the injection moulded part (12) is formed substantially cylindrically.

6. Method according to one of the preceding claims,
**characterised in that**
at least one covering surface (28) and/or a base surface (30) of the injection moulded part (12) is decorated with the first decorative ply (16) at least regionally, in particular substantially completely.

7. Method according to one of the preceding claims,
**characterised in that**
at least one region of a shell surface (32) of the injection moulded part (12), preferably substantially the entire shell surface (32) of the injection moulded part (12), is decorated with the second decorative ply (20).

8. Plastic moulded part (1), obtainable by means of a method according to one of the preceding claims, comprising an injection moulded part (12) with at least one first (22) and one second (24) surface region, a first decorative ply (16) and a second decorative ply (20), wherein the first decorative ply (16) is arranged at least in the first surface region (22), and the second decorative ply (20) is arranged at least in the second surface region (24).

9. Plastic moulded part (1) according to claim 8,
**characterised in that**
the first decorative ply (16) and the second decorative ply (20) directly abut on each other.

10. Plastic moulded part (1) according to one of claims 8 or 9,
**characterised in that**
the first decorative ply (16) and the second decorative ply (20) are formed identically.

11. Plastic moulded part (1) according to one of claims 8 to 10,
**characterised in that**
the first decorative ply (16) at least regionally decorates and/or covers a covering surface (28) and/or a base surface (30) of the injection moulded part (12), preferably substantially the entire covering surface (20) and/or substantially the entire base surface (30) of the injection moulded part (12).

12. Plastic moulded part (1) according to one of claims 8 to 11,
**characterised in that**
the second decorative ply (20) decorates and/or covers at least one part of a shell surface (32) of the injection moulded part (12), preferably substantially the entire shell surface (32) of the injection moulded part (12).

13. Plastic moulded part (1) according to one of claims 8 to 12,
**characterised in that**
the second decorative ply (20) decorates and/or covers at least one part of the covering surface (28) and/or of the base surface (30) of the injection moulded part (12).

## Revendications

1. Procédé de fabrication d'une pièce moulée en matière plastique (1) avec une surface décorée, présentant les étapes :
- de fourniture d'un produit intermédiaire en matière plastique (10) présentant une pièce coulée par injection (12) et au moins une première couche décorative (16),
- de fourniture d'un deuxième film d'estampage (18) avec une deuxième couche décorative (20),
- d'estampage à chaud du deuxième film d'estampage (18) sur le produit intermédiaire en matière plastique (10) et/ou sur la pièce coulée par injection (12),
dans lequel le produit intermédiaire en matière plastique (10) est fabriqué par au moins les étapes suivantes :
- d'agencement ou d'introduction d'un premier film d'estampage (14) avec la première couche décorative (16) dans une cavité (56) d'un moule de coulée par injection (50),
- d'injection par l'arrière au moins par endroits d'une masse de matière plastique sur le premier film d'estampage (14).

2. Procédé selon la revendication 1,
**caractérisé en ce**
**que** le deuxième film d'estampage (18) ou la deuxième couche décorative (20) du deuxième film d'estampage (18) sont appliqués de telle manière sur le produit intermédiaire en matière plastique (10) que le deuxième film d'estampage (18) ou la deuxième couche décorative (20) jouxte directement la première couche décorative (16) .

3. Procédé selon l'une quelconque des revendications précédentes,
**caractérisé par**
la fourniture de la première (16) et/ou de la deuxième (20) couche décorative présentant une métallisation, en particulier comprenant de l'aluminium, dans lequel la métallisation présente de manière préférée une épaisseur de couche de 5 nm à 100 nm, de manière particulièrement préférée une épaisseur de couche de 5 nm à 50 nm.

4. Procédé selon l'une quelconque des revendications précédentes,
**caractérisé par**
la fourniture de la première (16) et de la deuxième (20) couche décorative, dans lequel les couches décoratives (16, 20) sont réalisées de manière identique.

5. Procédé selon l'une quelconque des revendications précédentes,
**caractérisé en ce**
**que** la pièce coulée par injection (12) est réalisée de manière sensiblement cylindrique.

6. Procédé selon l'une quelconque des revendications précédentes,
**caractérisé en ce**
**qu'**au moins une surface couvrante (28) et/ou une surface de base (30) de la pièce coulée par injection (12) sont décorées au moins par endroits, en particulier sensiblement totalement, avec la première couche décorative (16).

7. Procédé selon l'une quelconque des revendications précédentes,
**caractérisé en ce**
**qu'**au moins une zone d'une surface enveloppante (32) de la pièce coulée par injection (12), de manière préférée sensiblement la totalité de la surface enveloppante (32) de la pièce coulée par injection (12) est décorée avec la deuxième couche décorative (20).

8. Pièce moulée en matière plastique (1) pouvant être obtenue par un procédé selon l'une quelconque des revendications précédentes, comprenant une pièce coulée par injection (12) avec au moins une première (22) et une deuxième (24) zone de surface, une première couche décorative (16) et une deuxième couche décorative (20), dans laquelle la première couche décorative (16) est disposée au moins dans la première zone de surface (22) et la deuxième couche décorative (20) est disposée au moins dans la deuxième zone de surface (24).

9. Pièce moulée en matière plastique (1) selon la revendication 8,
**caractérisée en ce**
**que** la première couche décorative (16) et la deuxième couche décorative (20) se jouxtent l'une l'autre directement.

10. Pièce moulée en matière plastique (1) selon l'une quelconque des revendications 8 ou 9,
**caractérisée en ce**
**que** la première couche décorative (16) et la deuxième couche décorative (20) sont réalisées de manière identique.

11. Pièce moulée en matière plastique (1) selon l'une quelconque des revendications 8 à 10,
**caractérisée en ce**
**que** la première couche décorative (16) décore et/ou recouvre au moins par endroits une face couvrante (28) et/ou une face de base (30) de la pièce coulée par injection (12), de manière préférée sensiblement la totalité de la face couvrante (20) et/ou sensiblement la totalité de la face de base (30) de la pièce coulée par injection (12).

12. Pièce moulée en matière plastique (1) selon l'une quelconque des revendications 8 à 11,
**caractérisée en ce**
**que** la deuxième couche décorative (20) décore et/ou recouvre au moins une partie d'une face enveloppante (32) de la pièce coulée par injection (12), de manière préférée sensiblement la totalité de la face enveloppante (32) de la pièce coulée par injection (12).

13. Pièce moulée en matière plastique (1) selon l'une quelconque des revendications 8 à 12,
**caractérisée en ce**
**que** la deuxième couche décorative (20) décore et/ou recouvre au moins une partie de la face couvrante (28) et/ou de la face de base (30) de la pièce coulée par injection (12).
